# EUROPEAN PATENT APPLICATION

(11) **EP 1 734 751 A2**
(43) Date of publication of application: **20.12.2006**
(21) Application number: 06115395.3
(22) Date of filing: 13.06.2006
(51) Int. Cl.: H04N 5/44, G06F 1/24

(54) **Apparatuses, methods, and data structures for hard reset**

(30) Priority: 16.06.2005 KR 2005051889
(71) Applicant: LG Electronics Inc., Yongdungpo-gu Seoul (KR)
(72) Inventor: Kim, In Moon, 431-070, Gyeonggi-do (KR)
(74) Representative: Meissner, Bolte & Partner

(57) **Abstract**

Broadcast receivers, methods, and data structures for performing a hard rest are disclosed. For instance, a communication device includes a status register that stores data that defines a hard reset indication field for indicating whether a hard reset is to be performed by a host.

## Description

This application claims the benefit of the Korean Patent Application No. 10-2005-0051889, filed on June 16, 2005, which is hereby incorporated by reference as if fully set forth herein.

### BACKGROUND

### Field of the Disclosure

The present disclosure relates to content broadcast technology, and more particularly, to apparatuses, methods, and data structures for hard reset.

### Background

Generally, there are many ways a host, such as a broadcast receiver, can be configured to receive audio/video (A/V) broadcast programs. For example, in the case of digital cable broadcast, a digital cable broadcast receiver may be configured to connect to a cable set-top box for access to a cable system operator. The cable set-top box allows the digital cable broadcast receiver to receive A/V broadcast programs in-band, and channel and electronic Program Guide (EPG) Information out-of-band (OOB). Such a digital cable broadcast receiver is known as an open cable receiver in the USA, a DVB-C receiver in Europe, and an ISDB-C receiver in Japan, for example.

An open cable broadcast receiver may use a cable card or a point of deployment (POD) module. The cable card may include a conditional access (CA) system that conditionally allows a user to have access to certain content and/or prevents certain content from being copied. The cable card may be separately provided and may obviate an elaborate security system to be built into the digital cable broadcast receiver. Thus, a low cost digital cable broadcast receiver may be available to users.

The cable card may use the Personal Computer Memory Card International Association (PCMCIA) standard, which in one configuration, the cable card may be inserted into a PCMCIA slot of the digital cable set-top box.

In another configuration, the cable broadcast receiver may receive cable broadcast without a cable set-top box. Such a cable broadcast receiver may be a Cable Ready Digital TV, for example.

A Cable Ready Digital TV is a type of a digital TV that has a built-in module having a functional equivalent of a cable set-top box and can receive terrestrial analog broadcast, terrestrial digital broadcast, cable analog broadcast and cable digital broadcast.

When an error occurs at an interface between a cable broadcast receiver and a cable card, the error is usually resolved by resetting the interface. For example, when an irrecoverable or fatal error occurs at the interface between the cable broadcast receiver and the cable card, or within the cable card, a hard reset, which may be a PCMCIA reset, should be performed. Otherwise, if the error is less serious, a soft reset, which may be a POD reset or a card reset, may be performed.

When the hard reset is performed, both the software and the hardware of the interface are reset or rebooted because usually the interface can no longer route MPEG data stream through the interface and is returned to the cable card. Thus, the hard reset reboots the software and resets the components associated with the interface in order to correct the problem, for example.

In known cable broadcast receivers, however, the hard reset is only requested by the broadcast receiver and is executed by the broadcast receiver. For example, if the cable card's READY signal is not active, the broadcast receiver may execute a hard reset.

Therefore, a disadvantage of known cable broadcast receivers is that the cable card cannot request a hard reset nor can it perform the hard reset by itself. For example, when a new cable card is inserted into a cable broadcast receiver, a hard reset should be performed on the cable card in order to become authorized. But, the cable card is not able to request the hard reset.

### SUMMARY

Accordingly, apparatuses, methods, and data structures for hard reset are highly desirable, for instance where a communication device such as a cable card or a module built into a cable broadcast receiver having an equivalent function of a cable card can request the hard reset.

Additional advantages, objects, and features of the invention may be apparent in part in the description which follows and in part may become apparent to those having ordinary skill in the art upon examination of the following or may be learned from practice of the invention. The objectives and other advantages of the various embodiments of the invention may be realized and attained by the structures and processes described in the written description, in the claims, and in the appended drawings.

To achieve these objects and other advantages and in accordance with the purpose of the invention, as embodied and broadly described herein, a communication device includes a status register that stores data that defines a hard reset indication field for indicating whether a hard reset is to be performed by a host.

In another aspect, a host includes a controller, wherein the controller is configured to execute a hard reset for a communication device-host interface after the host receives data from a communication device, wherein the data serves as hard reset request.

In another aspect, a method includes the steps of setting a value of a status register in a communication device, wherein the value indicates whether a hard reset is to be performed by a host for a communication device-host interface; and executing the hard reset when the hard reset indication is received by the host.

In yet another aspect, there is a data structure, wherein data associated with the data structure is stored in a communication device, and the data structure includes a hard reset indication field that contains data that indicates whether a hard reset is to be performed by a host.

It is to be understood that both the foregoing general description and the following detailed description are exemplary and explanatory and should not be construed as limiting the scope of the claims.

### BRIEF DESCRIPTION OF THE DRAWINGS

The accompanying drawings, which are included to provide a further understanding of the disclosure, are incorporated herein and constitute a part of this application. The drawings together with the written description serve to explain one or more embodiment(s) of the invention. In the drawings:

FIG. 1 illustrates an exemplary status register according to an embodiment of the present invention;

FIG. 2 illustrates an exemplary cable broadcast receiver according to an embodiment of the present invention; and

FIG. 3 illustrates an exemplary flow chart describing a reset method according to an embodiment of the present invention.

### DETAILED DESCRIPTION

Reference will now be made in detail to the preferred embodiments of the present invention, examples of which may be illustrated in the accompanying drawings. Wherever possible, the same reference numbers will be used throughout the drawings to refer to the same or like parts for simplicity.

The detailed description discloses a status register, which when used in a cable card allows the cable card to request to the host that a hard reset be performed. The host, in turn, performs the hard reset.

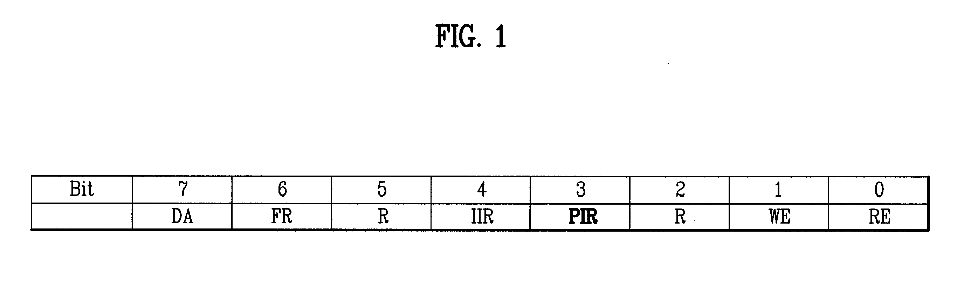

FIG. 1 illustrates an exemplary status register according to an embodiment of the present invention. In this embodiment, the status register has 8 bits. The status register includes, starting from a most significant bit (MSB), a Data Available (DA) field, a Free (FR) field, a Reserved (R) field, an Initialize Interface Request (IIR) field, a PCMCIA initialize request (PIR) field, a Reserved (R) field, a Write Enable (WE) field, and a Read Enable (RE) field. The bit indicated by R is a reserved bit for later extensions.

As shown in FIG. 1, the third bit of the status register is assigned as the PIR field, which may be used to request the host to perform a hard reset.

Although the third bit is used as the PIR field, other bits may be used according to a desired design. For example, the second bit or the fifth bit, currently designated as reserved bits, may be used as the PIR field. In fact, any bits of the status register may be designated as the PIR field if established in a protocol between the cable card and the host.

An operation using the status register is now described. The host intermittently or continuously monitors for a change in value in at least one of field values in the status register. As an example, if there is a change in a status register field value, the cable card may forward the changed value to the host. The host detecting the changed value performs an operation in response to the changed value. Alternatively, the host may interrogate the status register and perform an operation when the host detects a change in a status register field value.

For example, when a cable card is inserted into a host, the hardware of the host and the cable card are connected and also the software between the host and the cable card operates such that data can be exchanged between the two. With such connections made, if the cable card detects a non-fatal or "soft" failure in the software operation, it may set the IIR field value of the status register to one. If the cable card detects a fatal or "hard" failure in the software operation and/or hardware connection, it may set the PIR field value of the status register to one. In other words, the cable card can request a soft reset or a hard reset to the host using the IIR field value or the PIR field value, respectively, depending on the severity of the failure.

As an example, when the IIR field of the status register is set to one, the host executes a soft reset such as a POD reset. Usually, when a soft reset is executed, all open sessions are closed, and a transport connection and other operations are reset to an original state corresponding to when the cable card was powered on. In other words, software related to the host-cable card interface is initialized to its original state. A soft reset may not cause a routing change of MPEG data stream provided that the A/V streams have not been scrambled. In summary, the cable card may use the IIR field to request a soft reset of the host-cable card interface.

For example, the PIR field of the status register is set to one when the cable card needs to request a hard reset to be performed. The host executes the hard reset when the host detects that the PIR field of the status register is set to one.

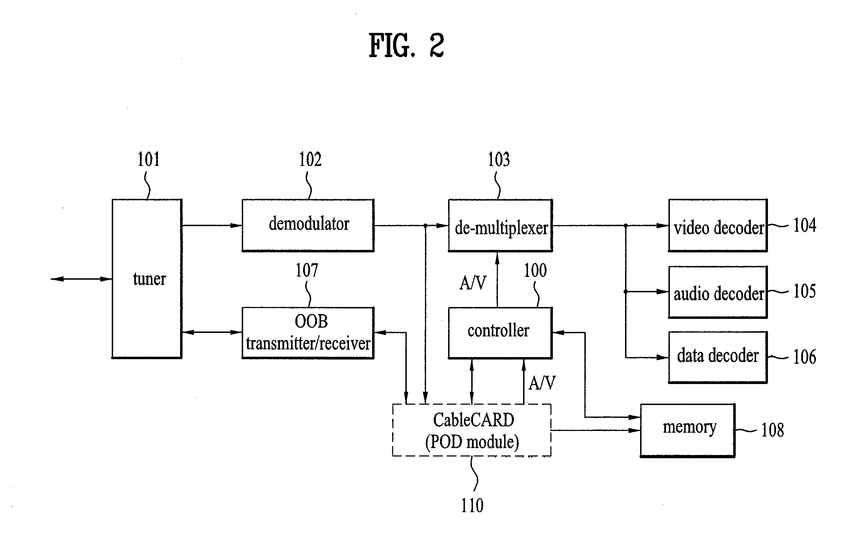

FIG. 2 illustrates a schematic block diagram of an exemplary cable broadcast receiver according to an embodiment of the present invention, in which a hard reset at the interface between the cable broadcast receiver and the cable card may be performed at the request of the cable card.

As shown in FIG. 2, the dashed lines for the cable card 110 indicates that the cable card 110 may be separately installed into the cable broadcast receiver. In an another embodiment, a module may be built into the cable broadcast receiver, which has a functional equivalent of the cable card 110.

The cable broadcast receiver may also include a controller 100, a tuner 101, a demodulator 102, a demultiplexer 103, a video decoder 104, an audio decoder 105, a data decoder 106, an OOB transmitter/receiver 107, and a memory 108.

Operation of the broadcast receiver will now be described. The broadcast receiver receives an audio/video (A/V) broadcast program signal, which is transmitted in-band. A tuner 101 tunes and filters to a selected portion of the A/V broadcast program signal, which is demodulated by the demodulator 102, and the forwarded to the cable card 110.

The cable card 110 may determine whether the demodulated A/V broadcast program signal is scrambled. If the A/V broadcast program signal is scrambled, then the cable card 110 may determine whether the scrambled A/V broadcast program signal has been approved for descrambling via a subscriber check, for example, which is usually provided by the broadcasting station. If approved, the cable card 110 may descramble the A/V broadcast program signal. Thereafter, the descrambled A/V broadcast program signal is forwarded to the demultiplexer 103.

Alternatively, where the broadcast receiver has a built-in module that is a functional equivalent of a cable card, or a descrambling module, the broadcast receiver may receive the descrambling information directly from the broadcasting station and store it within its memory or module memory for use by the built-in module or descrambling module.

The demultiplexer 103 may demultiplex a video signal and an audio signal from the A/V broadcast program signal, which may be time multiplexed, based on control signals from the controller 100. The demultiplexed video and audio signals are forwarded to the video decoder 104 and the audio decoder 105, respectively.

The video signal is usually compressed and encoded. The video decoder 104 decodes the compressed and encoded video signal, and thereby restores the video signal to its original form. Similarly, the audio signal is usually compressed and encoded. The audio decoder 105 decodes the compressed and encoded audio signal, and thereby restores the audio signal to its original form. The video decoder 104 may be an MPEG-2 decoder, and the audio decoder 105 may be an AC-3 decoder.

With the broadcast receiver including the cable card 110, channel and Electronic Program Guide (EPG) information may be received through the OOB band. Specifically, the broadcast receiver receives the channel and EPG information through the tuner 101, which are forwarded to the OOB transmitter/receiver 107, which, in turn, forwards the information to the cable card 110. The cable card 110 may parse the channel and EPG information and may store them in the memory 108. As needed, under the control signals of the controller 100, the stored channel and EPG information may be retrieved and forwarded to the data decoder 106 to be decoded.

According to the embodiment, when the cable card 110 forwards a PIR field value of the status register that is set to one or a predetermined value to the cable broadcast receiver, the controller 100 monitoring the status register values, detects the PIR field value and performs a hard reset, which may be a hard reset of the interface between the cable broadcast receiver and the cable card.

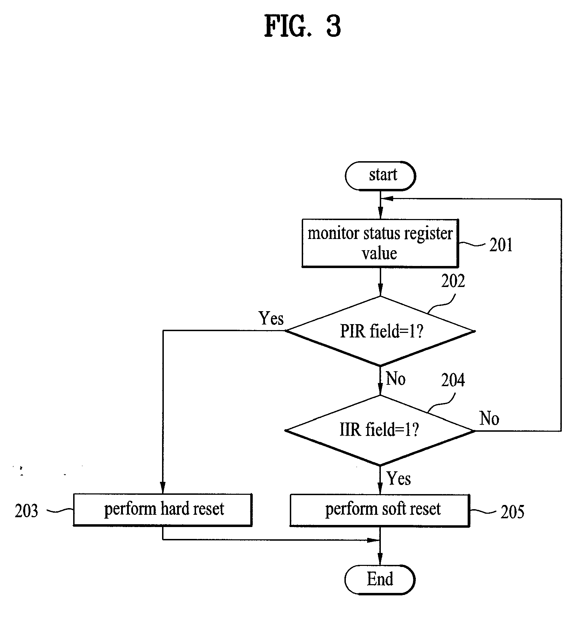

FIG. 3 illustrates an exemplary flow chart for performing a hard reset and a soft reset of an interface between a host and a communication device, which includes a cable card according to an embodiment of the present invention. For example, the flow chart may be performed by a controller. A process of the flow chart is now described.

At step 201, status register values are monitored. When a status register value is detected, the process continues to step 202. At step 202, a determination is made whether the detected value is a PIR field value, which has been set to one. If the PIR field value has been set to one, this value indicates that a hard reset should be performed at the interface between a host and a communication device. The operation continues to step 203, where a hard reset is performed at the interface between the host and the communication device.

Otherwise, if the PIR field value has not been set to one, the operation continues to step 204. At step 204, a determination is made whether the IIR field value has been set to one. If the IIR field value has been set to one, the process continues to step 205. At step 205, a soft reset is performed at the interface between the host and the communication device.

Otherwise, if the IIR field has not been set to one, then the process return to step 201 in order to continue monitoring for status register values. As described above, the disclosed broadcast receivers, methods, and data structures describes communication devices that include a cable card including a status register, where a particular bit may indicate a hard reset request to a host that includes a cable broadcast receiver. The host, in turn, may perform a hard reset at an interface between the host and communication device based on the hard reset request of the communication device. An advantage is that a communication device may request and cause a host to perform a hard reset at the interface between the host and the communication device as needed.

The present disclosure has been described using cable broadcast receivers, such as Cable Ready Digital TVs, etc., in which the cable broadcast receivers may have terrestrial analog/digital channels, and cable analog/digital channels. With modifications known to those skilled in the art, the present disclosure can be implemented in any terrestrial wired (e.g., telephone) and wireless (e.g., cellular) networks and satellite networks.

It will be appreciated that, in various of the above-disclosed and other features and functions, or alternatives thereof, they may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow process or data structure can be implemented as a self-consistent sequence of computerized steps that lead to a desired result. These steps can be defined by and/or in one or more computer instructions stored in a computer-readable medium, or can be encompassed using a signal, or provided as software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that various of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A data structure, wherein data associated with the data structure is stored in a communication device, the data structure comprising a hard reset indication field that contains data that indicates whether a hard reset is to be performed by a host.

2. The data structure as set forth in claim 1, wherein at least one of a second bit, a third bit, and a fifth bit in an eight bit status register is allocated to the hard reset indication field.

3. The data structure as set forth in claim 1, further comprising a soft reset indication field that contains data that indicates whether a soft reset is to be performed by the host.

4. A processor executable medium having instructions contained therein, which when executed by a processor, causes the processor to generate the data structure claimed in claim 1.

5. A signal comprising the data structure as set forth in claim 1, which when received by the host, causes the host to perform the hard reset.

6. A communication device comprising:
a status register that stores data that defines a hard reset indication field for indicating whether a hard reset is to be performed by a host.

7. The communication device as set forth in claim 6, wherein at least one of a second bit, a third bit, and a fifth bit in an eight bit status register is allocated to the hard reset indication field.

8. The communication device as set forth in claim 6, wherein the communication device is configured to forward the data that defines the hard reset thereby indicating a request for the hard reset, and wherein the host recognizes that the hard reset request occurred for a communication device-host interface on receipt of the data.

9. The communication device as set forth in claim 6, wherein the communication device includes a cable card.

10. The communication device as set forth in claim 9, wherein the cable card is configured to forward data that defines the hard reset after the cable card is coupled to the host.

11. The communication card as set forth in claim 6, wherein the status register stores data that defines a soft reset indication field for indicating whether a soft reset is to be performed by the host.

12. A host comprising a controller, wherein the controller is configured to execute a hard reset for a communication device-host interface after the host receives data from a communication device, wherein the data serves as hard reset request.

13. The host as set forth in claim 12, wherein the controller is configured to immediately execute the hard reset on receipt of the request for the hard reset.

14. The host as set forth in claim 12, wherein the host is adapted to receive and electrically connect with the communication device.

15. The host as set forth in claim 14, wherein the communication device includes a cable card.

16. The host as set forth in claim 12, wherein the host is configured to monitor the communication device for the hard reset request.

17. A reset method comprising the steps of:
setting a value of a status register in a communication device, wherein the value indicates whether a hard reset is to be performed by a host for a communication device-host interface; and
executing the hard reset when a hard reset indication is received by the host.

18. The reset method of claim 17 further comprising the step of the host immediately executing the hard reset on receipt of the hard reset indication.

19. The reset method of claim 17 further comprising the step of the host monitoring communication from the communication device for the hard reset indication.

20. The reset method of claim 17 further comprising the steps of:
setting a value in the status register of the communication device indicating whether a soft reset is to be performed by a host; and
executing the soft reset when the soft reset indication is received by the host.
